# EUROPEAN PATENT SPECIFICATION

(11) **EP 0 736 494 B1**
(45) Date of publication and mention of the grant of the patent: **08.08.2001**
(21) Application number: 96830113.5
(22) Date of filing: 15.03.1996
(51) Int. Cl.: C02F 3/32, E02B 3/12

(54) **Method and means for phytopurifying bodies of waters and coast embanking and consolidation**
Verfahren und Mittel zur Phytoreinigung von Gewässern, Küstenschutz und Küstensicherung
Procédé et moyens pour la phytopurification d'un plan d'eau et endiguement et consolidation des côtes

(30) Priority: 17.03.1995 IT RM950160
(43) Date of publication of application: 09.10.1996
(73) Proprietor: CODRA MEDITERRANEA S.r.l., 85100 Potenza (IT)
(72) Inventor: De Simone, Sergio Maria, 85100 Potenza (IT)
(74) Representative: Sarpi, Maurizio

(56) References cited:
- EP-A- 0 368 814
- EP-A- 0 562 135
- EP-A- 0 579 092
- EP-A- 0 598 999
- DE-A- 3 917 357
- DE-A- 4 017 825
- US-A- 4 995 969

## Description

The present invention relates to the field of the environment restoration and more particularly the removal of the pollution from the flowing waters and the consolidation of the shores of sheets of water by phytopurifying the water and using inert materials fully decomposable into organic substances.

The pollution of the environment is a hard, knotty problem to be solved in direct or indirect connection to all life aspects in the earth. The problem of the water quality is particularly critical: today, the common welfare of the water and the natural regeneration systems are treated in such a way that everyone is led to believe that they will not be available in a near future any longer. In this regard the behaviour of man is marked with ignorance, lack of foresight and irresponsibility. The compatible quality for ensuring the vegetable, animal and human life has already reached its limit in many fields. The level of pollution is such that using water for industry, zootechny, agricultural irrigation as well as any other biological function, including the public health and the use of seas for tourism and recreation, has become harmful and dangerous.

The use of polluted water for irrigation may alter the biological systems of the soil, on the balance of which the typical decomposition cycle of the organic substances and the development of humus depend, which is the essential factor for a profitable practice of the farming. However, also the agriculture is responsible for the environment pollution: the excessive use of chemical substances (antiparasitic substances, herbicides, fertilizers, etc.) flowing into the inner and sea waters plays an important role in the alteration of the delicate biological systems involving fauna.

It should be appreciated that the aquatic birdlife keep away from the polluted fresh water, which heavily affects the natural, biological balance and the economic productivity.

The steps hitherto taken to solve such problems are absolutely insufficient and have above all the shortcoming of dealing only with some aspects of the question without keeping into account the balance of the ecological system as a whole.

There was proposed to insolubilize the fertilizers and the other substances rich in nitrogen and phosphorus in order to avoid the eutrophy (excessive development of the underwater flora) and the reduction of the dissolved oxygen content by treating the sewer water before reaching rivers or lakes. Such systems involve, however, very great expenses and, where installed, heavily change the environment.

Shore consolidation actions to avoid erosion typically involve the concreting of large areas which lose their scenic characteristics to the prejudice of the tourism and the life of the local animal population.

One object of the present invention is that of finding a solution for the problems mentioned above by providing a method of purifying and giving the original nature to flowing waters without resorting to the use of chemical or mechanical means but only to bioengineering and/or phytopurifying processes compatible with the ecological system.

Another object of this invention is that of providing a method for consolidating and embanking the shores of sheets of water by materials decomposable into organic substances which decompose leaving space only to the vegetation after having initially performed a mechanical supporting function.

Still another object of this invention is that of providing a method of environment restoration which allows both the phytopurification and the restoration to its original nature of flowing waters as well as the consolidation and the embanking of the shores to be carried out by using inert materials fully decomposable into organic substances and phytopurifying essential oils capable of being coated on any shore without vegetation and/or eroded by any cause anthropical or not.

According to the invention, such objects are achieved by providing a method of phytopurifying and giving the original nature to flowing waters characterized by the following steps:
a) collecting in situ, selecting, preparing, reproducing, and growing autochthonous fluvial vegetal species in laboratory and/or forced growing areas;
b) arranging tubular members or sacks of any shape and a predetermined size formed of a mat of coir or sisal or other material decomposable into organic substances and oriented according to the downflow of the running water;
c) planting out the autochthonous fluvial vegetal species prepared in step a) into said sacks or tubular members;
d) spreading out a mat having a predetermined size and formed of coir or sisal or other material decomposable into organic substances (biomat) from the bank to the river bed and on the bank itself;
e) anchoring said biomat to the ground by wooden stakes;
f) installing and securing said tubular members or sacks to said biomat in positions (oriented to the direction of the stream) according to the downflow of the water;
g) installing near the embanking stakes a mattress with the vegetal material of said autochthonous fluvial vegetal species prepared in step a);
h) planting out an organic substrate at the end of the biomat to fill the gap between the mattress and the bank and then hydroseeding the autochthonous fluvial vegetal species prepared in step a);
i) planting out autochthonous cuttings to ensure the perfect consolidation of the bank, thus avoiding any erosion and/or underwashing in case of a river flood.

According to a peculiar characteristic of this invention, the wooden stakes which are used for anchoring the biomat may also be autochthonous, alive, vegetal pegs capable to speed up the consolidation of the banks.

Advantageously the system formed of the biomat and the sacks does not change the unevenness factor of the river bed. In addition, the installation of such a system is capable to maximize the contact between water and phytopurifying system and forms ecological spaces, thus promoting the development both of fauna and flora.

The dimension of the whole system, the diameter of the tubular members, the gap between tubular members, the distance from the bank are varying as a function of the characteristics and the pollution levels of the site.

Further characteristics and advantages of the present invention will be more readily apparent from the following description with reference to the accompanying drawings showing only by way of an indicative and non limiting example five different embodiments of the method of the invention.

In the drawings:
Fig. 1 shows a cross section of a portion of a river bed and the bank of a watercourse with the biomat and sack system of the invention;
Fig. 2 is still a cross section of a central portion of the river bed, in which the method of the invention is used;
Fig. 3 is still a cross section of a strip treated according to the invention and lying before the high-water bed of a sheet of water, which is overflown as the rate of flow changes, and shows the surface shaping of a reflux basin to increase the contact with the means of the invention;
Fig. 4 shows the application of the method for restoring the coastal dune cordons;
Figs. 5 and 6 show front and side views of stakes and bars of dead and alive wood at the slope of a sheet of water for anchoring the biomat;
Fig. 7 shows the effect of taking root and consolidation of the stakes and bars of Fig. 6;
Fig. 8 shows autochthonous, alive, vegetal stakes for planting out cuttings;
Figs. 9, 10 and 11 show some types of biomat;
Fig. 12 shows a plan view of some tubular members applied between two biomats;
Fig. 13 is a section of Fig. 12 along a longitudinal plane and shows the fastening ties.

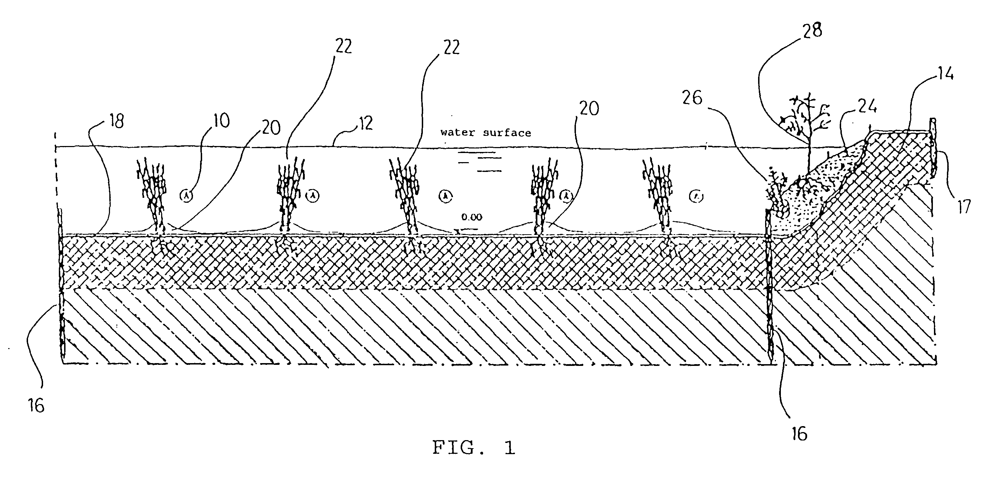

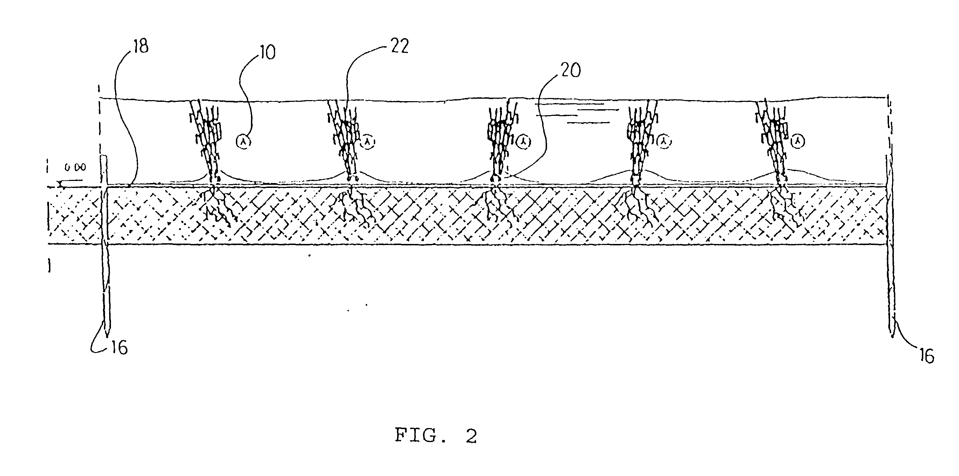

With reference to Figures 1 and 2, there is shown a first preferred embodiment of the method according to the invention for the phytopurification of the water and the consolidation of the banks of a watercourse. The river bed is generally indicated at 10, the water surface at 12 and the bank strip at 14.

According to the invention it is provided to use mechanical supports of wood and/or other inert material decomposable into organic substances having the function of anchoring and supporting the bank, and a support (biomat) of coir or other material decomposable into organic substances having the function of anchoring or forming sacks of any shape, in particular tubular members, containing suitable amounts of phytopurifying vegetal species prepared in laboratory and/or forced growing areas, the quality of which depends upon the site.

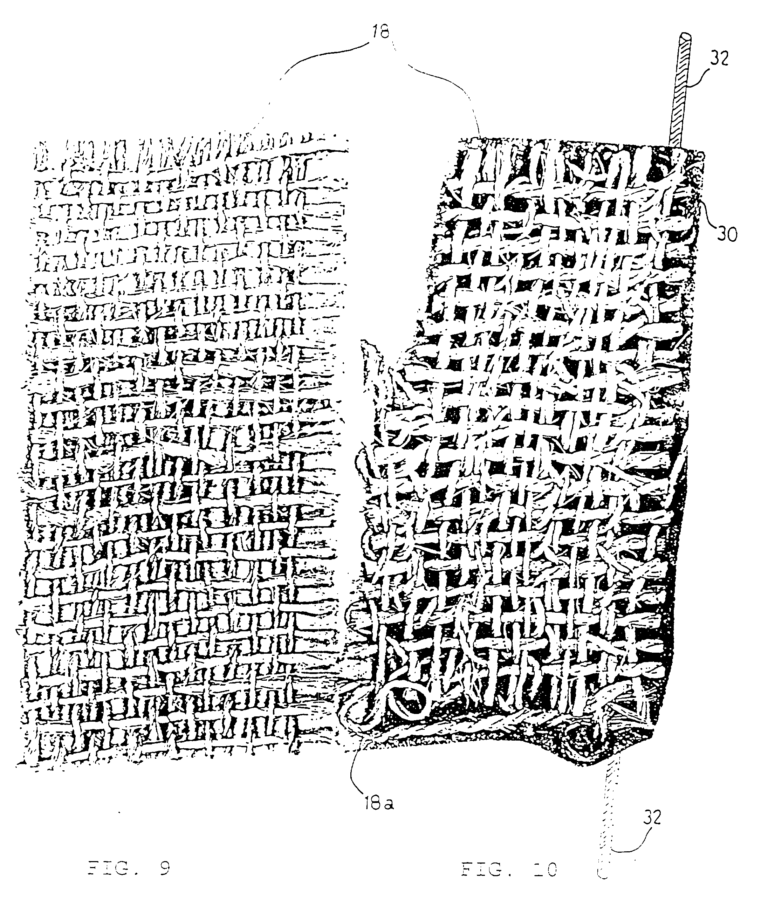

In the illustrated example the mechanical supports are formed of stakes of dead wood, in particular stakes of chestnut-wood 16 which are driven into the bed of the watercourse, and stakes of chestnut-wood 17 driven into the bank. The biomat, indicated at 18, which is spread out from one bank to the other bank following the river bed, is a biomat of coir, sisal or other similar vegetal fibre decomposable into organic substances and having a high tensile strength, preferably over 8,5 kN/m, and formed by threads not lower than 2 mm thick, preferably 5 mm thick, with or without curls 18a, as shown in Figures 9, 10 and 11.

The sacks or tubular members, indicated at 20, are still of coir, sisal or the like and preferably are installed on the mat following the direction of the stream, i.e. crosswise to the extension of the mat.

Of course, it is possible to form sacks or tubular members directly in the mat during the weaving of the latter, thus reducing the time of planting them out. It is also possible to secure such sacks or tubular members to several biomats before planting them out.

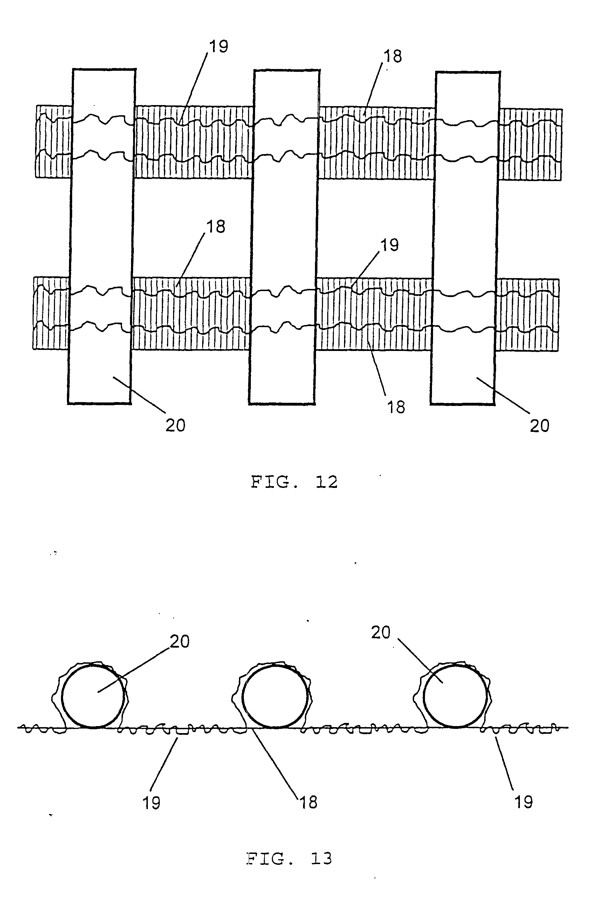

In the example illustrated in Figs. 12 and 13, tubular members 20 of diameter greater than 20 cm and a length of about 2,4 m are used and secured to a pair of biomats 18 by tying threads of natural fibres or the like 19. Suitable autochthonous fluvial vegetal species 22 beforehand collected, selected and prepared are planted out into said tubular members on mattress suitably mixed and integrated with organic substances.

By such contrivance the whole system is perfectly compatible with the downflow of the waters and does not modify the unevenness factor of the river bed. At the same time the contact between water and phytopurifying vegetal species is maximized, and ecological spaces are created, thus promoting the development both of fish fauna and flora.

The consolidating function, which is essential at the banks, is performed by extending biomat 18 on which a mattress or an organic topsoil 24 is placed having the function of supporting and promoting the taking root of autochthonous, alive bundle of sticks 26 still provided by collection in situ, selection and preparation, as already described.

Cuttings 26 are such as to ensure the perfect consolidation of the bank so that any erosion and/or underwashing in case of a river flood is avoided.

The phytopurifying function also affects the central part of the river bed and is performed by the portion of biomat 18 between the mechanical supports of wood 16 having the function of anchoring the construction to the river bed.

The described arrangement is capable from the mechanical point of view to fit the varying flow rate, and general pedological and environmental conditions. The arrangement may be integrated with hydroseeding of autochthonous fast-growing vegetal species in order to speed up first of all the consolidation of the surface.

In any case the described arrangement is capable to modify and fit the environment in time and in natural fashion by improving and integrating itself into the existing ecological system. The organic materials initially acting as mechanical support decompose successively giving space only to the vegetation.

The planting out steps are the following:
a) collecting in situ, selecting, preparing, reproducing, and growing a plurality of autochthonous fluvial vegetal species in laboratory and/or forced growing areas;
b) arranging tubular members or sacks 20 of any shape and a predetermined size oriented according to the downflow of the running water;
c) planting out the autochthonous fluvial vegetal species 22 prepared in step a) into said sacks or tubular members 20;
d) spreading out the mat 18 having a predetermined size and formed of coir or sisal or other material decomposable into organic substances (biomat) from the bank to the river bed and on the bank itself;
e) anchoring biomat 18 to the ground by wooden stakes 16 or 17;
f) installing and securing said tubular members or sacks 20 to said biomat 18 in positions (oriented to the direction of the stream) according to the downflow of the water;
g) installing near the embanking stakes 17 a mattress 26 with the vegetal material of said autochthonous fluvial vegetal species prepared in step a);
h) planting out an organic substrate 24 at the end of biomat 18 to fill the gap between the mattress 26 and the bank and then hydroseeding the autochthonous fluvial vegetal species prepared in step a);
i) planting out autochthonous cuttings 28 to ensure the perfect consolidation of the bank.

Preferably, both step d) and step f), i.e. spreading out the biomat and installing the tubular members on the same biomat, are carried out on board of crafts. If the sacks are directly embodied into the mat or secured to ground before the installation of the latter, the two steps are reduced to only one.

Should the system be installed on the whole river bed from one bank to the other bank, it is sufficient to use only one craft starting from a bank and spreading the mat progressively out. Should the system be installed only at the central part of the river bed for a phytopurification only, a pair of boats will be necessary.

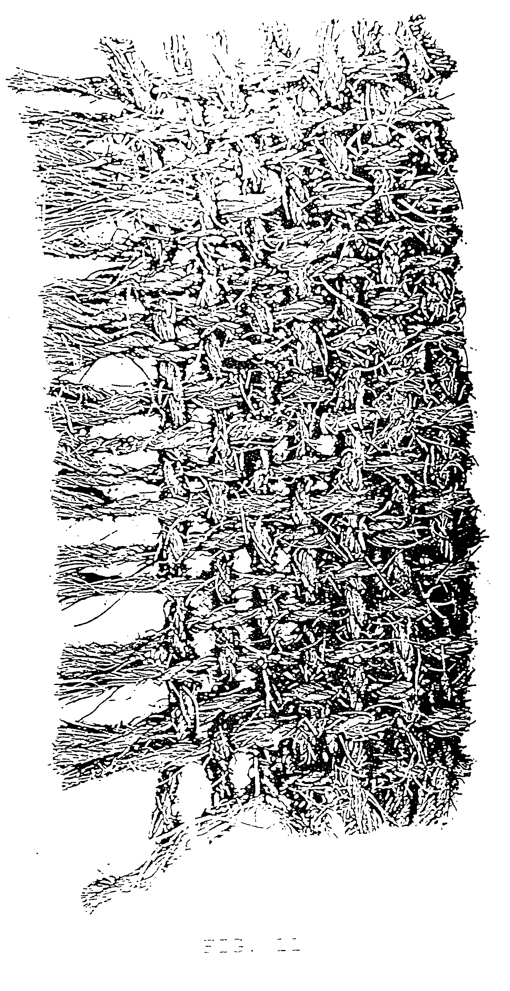

In order to promote such operations and to allow the mats to be correctly positioned on the river bed, the mats are advantageously provided with two side stiffening strips 30 (Fig. 10) along which a wire 32 is passed which may be removed by the operators at the end of the installation.

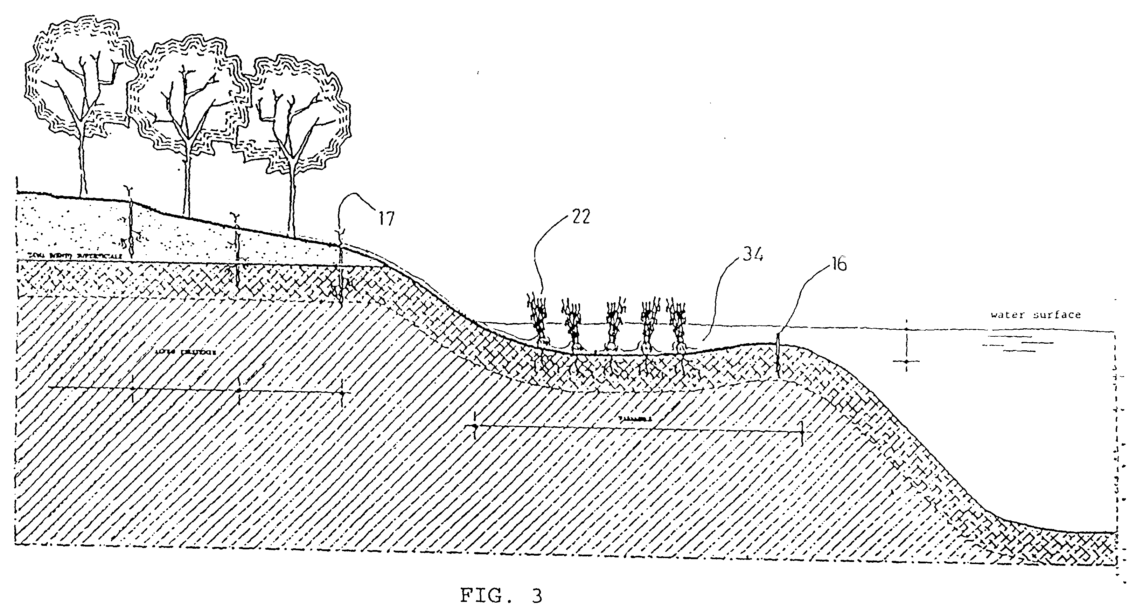

Fig. 3 shows a system of phytopurifying and consolidating a strip before the high-water bed of a watercourse. The system is located on those areas adjacent to the watercourse which are usually overflown as the rate of flow changes. Such a situation can be assisted by a slight surface shaping in order to create downflow basins in which the contact between the system and the water increases due to the reduction of speed of the latter. The system, still formed of a mat 18 decomposable into organic substances and sacks or tubular members 20 in which suitably mixed topsoils having the function of promoting the taking root and the development of the autochthonous phytopurifying vegetal species 22, is located on the bottom of the downflow basin 34 and anchored to the same by stakes 16, 17 of dead/alive wood.

Along the downflow stream through the system there is provided the natural separation of the water into two superimposed layers, the lower and the upper of which operate under anaerobic and aerobic conditions, respectively. The combination of the two layers enhances the phytopurifying effect. Thus, damp areas, the so-called oasis, are created with such features (lower speed of the water, greater relative humidity, optimum microbiological conditions, greater oxygenation, etc.) that the phytopurification and the establishing of a complete and complex ecological system are optimized.

The portion before the high-water bed can be affected by a final hydroseeding of autochthonous fast-growing vegetal species in order to speed up the consolidating effect and to start up the arrangement.

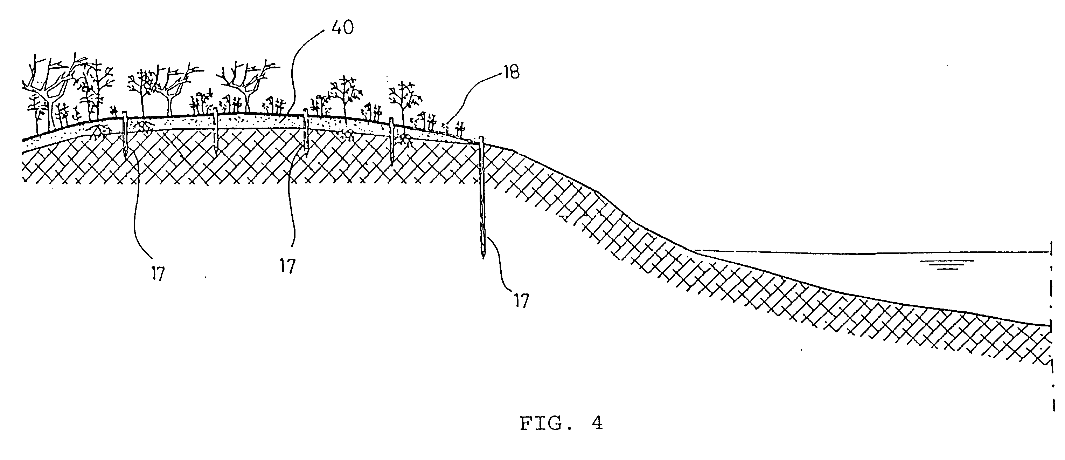

Fig. 4 shows another embodiment of the present invention. In this case the installation has above all the function of integrating itself into the natural ecological system by restoring the coastal dune cordons. Such a function is, therefore, also protective beside scenic.

The operating steps include:
- a slight surface shaping of the regressive dune indicated at 40:
   - the installation of biomat 18 by alive/dead stakes 17;
   - the planting out and the introduction into said biomat of autochthonous vegetal species selected with particular resistance to saltiness and wind, shrub-grass and arboreal herbs collected in situ and reproduced and grown in laboratory and/or forced growing areas.
The arrangement is integrated with hydroseeding of autochthonous fast-growing vegetal species in order to speed up the vegetal covering.

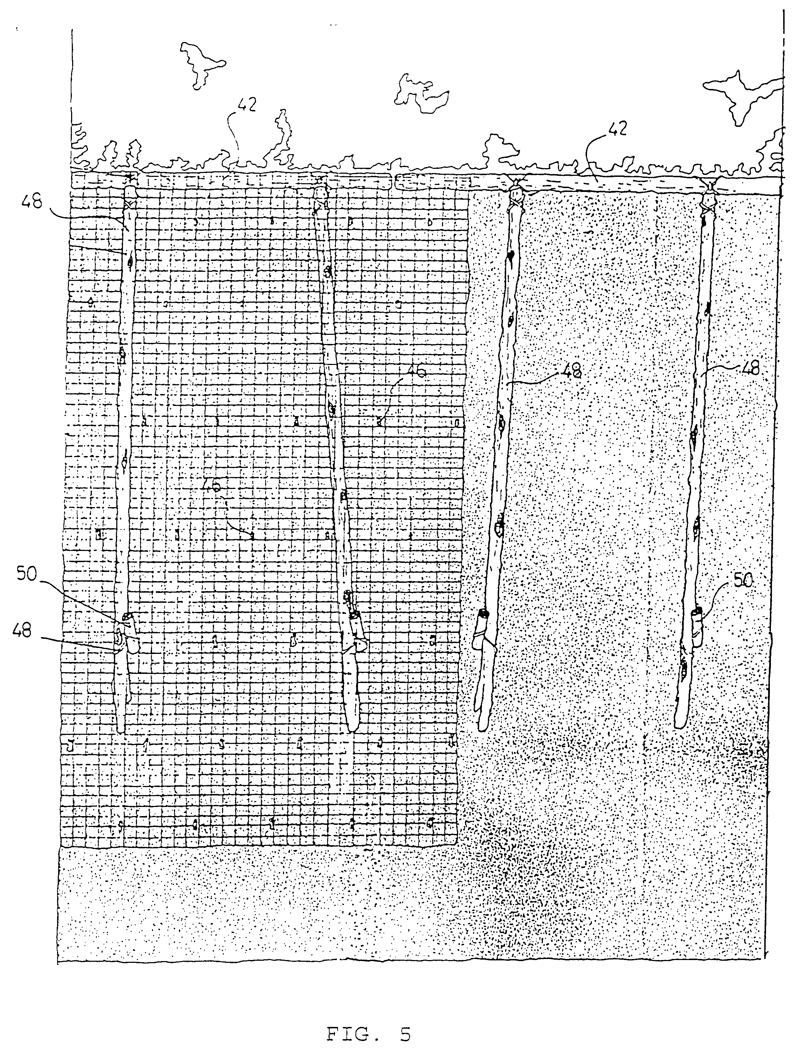

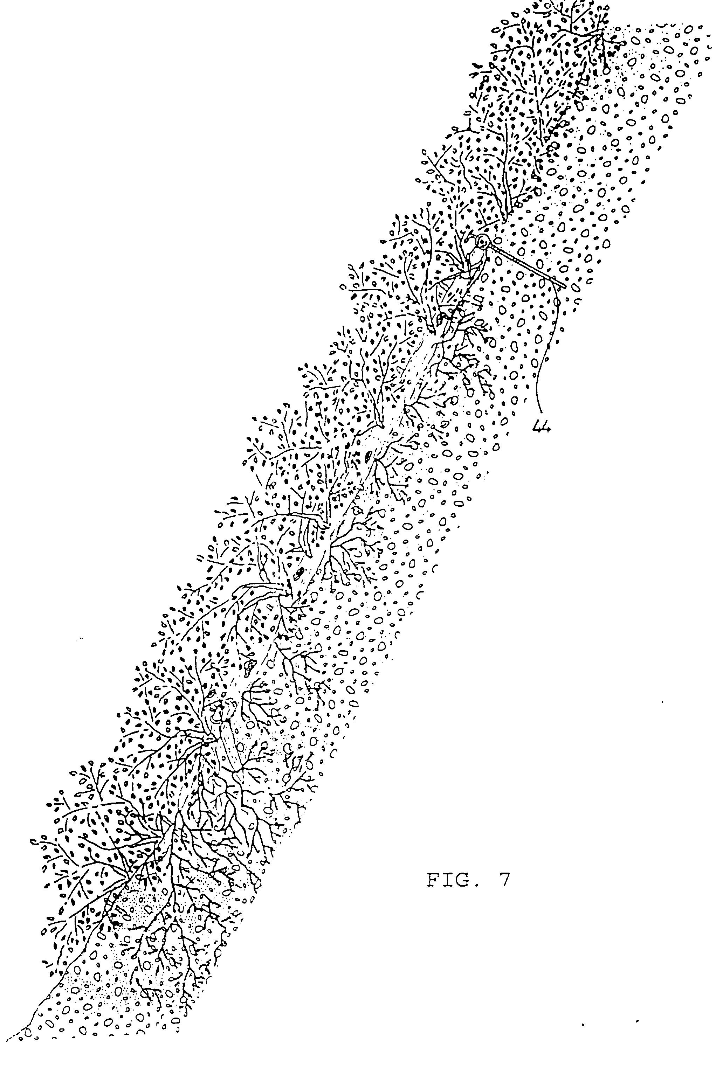

Figs. 5, 6 and 7 show an embodiment relative to the consolidation of slopes particularly affected by erosion and surface washing away.

In such a case the mechanical supports, by which biomat 18 is secured, are bars 42 of dead wood having a diameter of 10 to 15 cm and being horizontally placed under the existing layer of vegetation and anchored to the ground by wooden and/or steel stakes 44 of suitable diameter. Biomat 18 having a weft varying as a function of sites and specifications is secured to such a support and covers the surface concerned.

According to a characteristic of the invention, the biomat is anchored to the slope which is covered by alive stakes 46, i.e. autochthonous alive vegetal species created in laboratory and/or forced growing areas, having longitudinal and transversal gaps varying as a function of the site of operation.

Some poles 48 (alive vegetal poles) prepared in laboratory and/or forced growing areas and having a diameter and a length varying as a function of the site of operation are anchored to horizontal bars 42 by ropes of natural fibres.

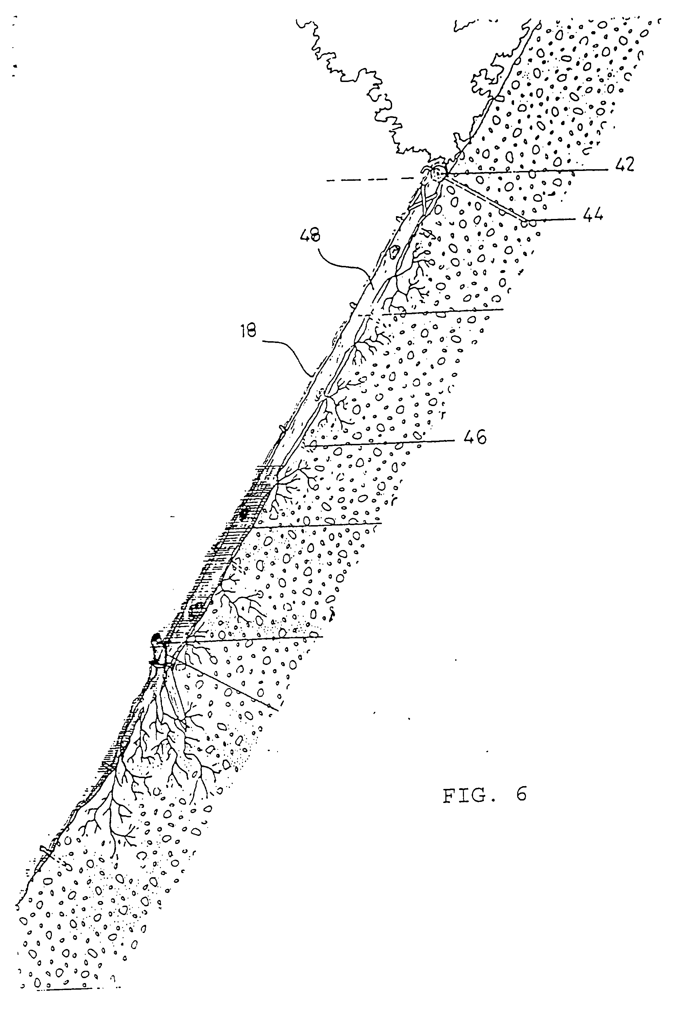

As shown in Fig. 6, the poles are placed along the slope under biomat 18 contacting the ground. Poles 48 are anchored at the lower side to the ground by tying them with a rope of natural fibres to previously secured stakes 50 of dead wood in order to prevent the poles from floating before taking root.

The whole arrangement, including a strip superimposed to the existing vegetation and having a varying width, is affected by hydroseeding of shrub-grass and arboreal herbs prepared in laboratory and/or forced growing areas in order to speed up the establishing of an autochthonous, complete, complex vegetal covering.

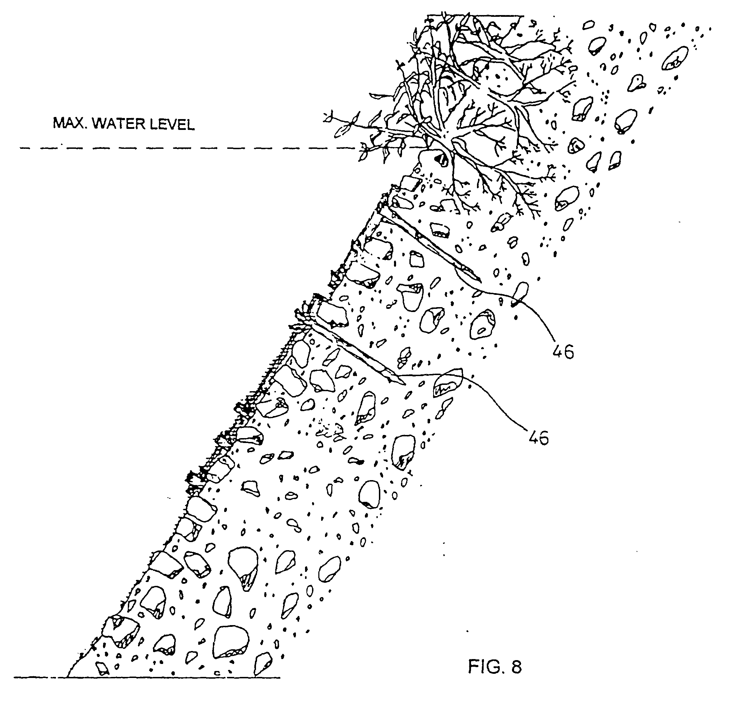

The slope particularly affected by erosion and surface washing away can receive stakes and alive vegetal species 46 (Fig. 8) positioned and driven into the ground and between the rock slits. Such action is aiming at mechanically consolidating the slope and promoting the shading and the natural growth of the vegetation.

The method of environment restoration which is the object of the invention has been described according to preferred embodiments thereof. However, it should be appreciated that a number of changes and modifications may be made by those skilled in the art with reference to the different environmental situations without departing from the scope of the present invention as defined in the following claims.

## Claims

1. A method of phytopurifying and giving the original nature to flowing waters as well as embanking and consolidating the shores of sheets of water, characterized in providing the installation of a mat of coir or other material decomposable into organic substances into the river bed and on the bank strips of the watercourse concerned, and securing to the mat sacks of any shape or tubular members still of material decomposable into organic substances, in which phytopurifying vegetal species previously grown in laboratory and/or forced growing areas are planted out in a suitable quantity, said mat being anchored to the ground by mechanical supports of wood and/or other material decomposable into organic substances which are installed and plunged into the river bed and on the bank with the purpose of embanking and consolidating it.

2. The method of claim 1, characterized by the following steps:
a) collecting in situ, selecting, preparing, reproducing, and growing autochthonous fluvial vegetal species in laboratory and/or forced growing areas;
b) arranging tubular members or sacks of any shape and a predetermined size formed of a mat of coir or sisal or other material decomposable into organic substances and oriented according to the downflow of the running water;
c) planting out the autochthonous fluvial vegetal species prepared in step a) into said sacks or tubular members;
d) spreading out a mat having a predetermined size and formed of coir or sisal or other material decomposable into organic substances (biomat) from the bank to the river bed and on the bank itself;
e) anchoring said biomat to the ground by wooden stakes;
f) installing and securing said tubular members or sacks to said biomat in positions (oriented to the direction of the stream) according to the downflow of the water;
g) installing near the embanking stakes a mattress with the vegetal material of said autochthonous fluvial vegetal species prepared in step a);
h) planting out an organic substrate at the end of the biomat to fill the gap between the mattress and the bank and then hydroseeding the autochthonous fluvial vegetal species prepared in step a);
i) planting out autochthonous cuttings to ensure the perfect consolidation of the bank, thus avoiding any erosion and/or underwashing in case of a river flood.

3. The method of claims 1 and 2, characterized in that the mat anchoring stakes are of dead wood.

4. The method of claims 1 and 2, characterized in that the mat anchoring stakes are autochthonous alive vegetal stakes.

5. The method of claims 1 and 2, characterized in that the biomat is a mat formed of braided vegetal material such as coir, sisal or other similar material having a high longitudinal tensile strength.

6. The method of claims 1 and 2, characterized in that the sacks or tubular members where the autochthonous fluvial vegetal species are planted out and secured to the biomat so as to be oriented according to the direction of the river stream, the securing means being of the same material as the biomat and decomposable into organic substances.

7. The method of the preceding claims, characterized in that there is provided a further step of positioning and driving autochthonous, alive vegetal stakes prepared in laboratory or forced growing areas into the slope particularly affected from erosion and surface soil washing away and between the rock slits.

8. The method of claim 2, characterized in that the tubular members are integral with the biomat or tied thereto before step d).

9. The method of claims 1 and 2, characterized in that each tubular member is tied to two transversal, parallel and spaced apart biomats.

10. A system for phytopurifying and giving the original nature to flowing waters as well as for embanking and consolidating the shores of sheets of water, characterized in that it comprises:
- a portion of river bed or shore;
- a mat of vegetal fibre, such as coir or other material decomposable into organic substances, capable of being spread out on the river bed or shore;
- mechanical support means in form of stakes of wood or other biodegradable material driven into the mat and the ground to fix the mat to the ground;
- a plurality of sacks or tubular members of a biodegradable material installed and secured to said mat, in which phytopurifying autochthonous vegetal species previously selected and prepared in laboratory and/or forced growing areas are located;
- said mechanical support means being both of dead and alive wood and specifically of autochthonous, alive vegetal species prepared in laboratory and/or forced growing areas.

11. The system of claim 10, characterized in that said mat has two side stiffening strips along which a removable wire or a tie is passed to facilitate the installation on the river bed.

12. The system of claims from 10 on, characterized in that said mat is formed of wires of diameter not lower than 2 mm.

13. The system of claims from 10 on, characterized in that said mat has a tensile strength not lower than 8 kN/m.

14. The system of claims from 10 on, characterized in that the tubular members are of diameter greater than 20 cm.

## Revendications

1. Procédé pour phytopurifier et faire recouvrer leur nature originelle à des eaux courantes ainsi que pour endiguer et consolider les rives de plans d'eau, caractérisé en ce que l'on met en place un mat de coir ou d'un autre matériau décomposable en substances organiques dans le lit et sur les bandes des berges du cours d'eau concerné, en ce que l'on fixe au mat des sacs de forme quelconque ou des éléments tubulaires également en matériau décomposable en substances organiques, dans lesquels sont plantés en quantité adéquate des espèces végétales phytopurifiantes cultivées préalablement en laboratoire et/ou sur des aires de forçage, le mat étant ancré dans le sol par des supports mécaniques en bois et/ou dans un autre matériau décomposable en substances organiques qui sont installés et immergés dans le lit de la rivière et sur la berge dans le but de l'endiguer et de la consolider.

2. Procédé selon la revendication 1, caractérisé par les étapes suivantes de :
a) récupérer sur site, sélectionner, préparer, reproduire et cultiver des espèces végétales fluviales autochtones en laboratoire et/ou sur des aires de forçage ;
b) disposer des éléments tubulaires ou des sacs de forme quelconque et d'une dimension prédéterminée formés d'un mat de coir ou de sisal ou d'un autre matériau décomposable en substances organiques et orientés selon le flot descendant de l'eau courante ;
c) planter des espèces végétales fluviales autochtones préparées au cours de l'étape a) dans les sacs ou les éléments tubulaires ;
d) étendre un mat de dimension prédéterminée constitué de coir ou de sisal ou d'un autre matériau décomposable en substances organiques (mat biologique) de la rive vers le lit de la rivière et sur la rive elle-même ;
e) ancrer le mat biologique dans le sol par des pieux en bois ;
f) installer et fixer des éléments tubulaires ou des sacs au mat biologique dans des positions (orientées dans la direction du courant) correspondant au courant descendant de l'eau ;
g) disposer à côté des pieux d'ancrage un mat de matériau végétal constitué des espèces végétales fluviales autochtones préparées au cours de l'étape a) ;
h) planter un substrat organique à l'extrémité d'un mat biologique pour occuper l'espace entre le mat et la rive et hydrosemer les espèces végétales fluviales autochtones préparées au cours de l'étape a) ;
i) planter des boutures autochtones pour assurer la parfaite consolidation de la rive, évitant ainsi toute érosion et/ou affouillement en cas d'inondation.

3. Procédé selon les revendications 1 et 2, caractérisé en ce que les pieux d'ancrage du mat sont en bois mort.

4. Procédé selon les revendications 1 et 2, caractérisé en ce que les pieux d'ancrage du mat sont des pieux végétaux autochtones vivants.

5. Procédé selon les revendications 1 et 2, caractérisé en ce que le mat biologique est un mat formé de matériau végétal tressé tel que le coir, le sisal ou un autre matériau similaire ayant une force élastique longitudinale élevée.

6. Procédé selon les revendications 1 et 2, caractérisé en ce que les sacs ou les éléments tubulaires dans lesquels les espèces végétales fluviales autochtones sont plantées et fixées au mat biologique de manière à être orientées dans la direction du courant de la rivière, les moyens de fixation étant réalisés dans le même matériau que le mat biologique et pouvant se décomposer en substances organiques.

7. Procédé selon l'une quelconque des revendications précédentes, caractérisé par une étape ultérieure de mise en place et d'enfoncement de pieux végétaux vivants autochtones préparés en laboratoire ou sur des aires de forçage dans la pente particulièrement atteinte par l'érosion et l'enlèvement par l'eau de la terre de surface et entre les fentes de rochers.

8. Procédé selon la revendication 2, caractérisé en ce que les éléments tubulaires sont réalisés d'une pièce avec le mat biologique ou y sont fixés avant l'étape d).

9. Procédé selon les revendications 1 et 2, caractérisé en ce que chaque élément tubulaire est attaché à deux mats biologiques transversaux, parallèles et espacés l'un de l'autre.

10. Procédé pour phytopurifier et faire recouvrer leur nature originelle à des eaux courantes ainsi que pour endiguer et consolider les rives de plans d'eau, caractérisé en ce qu'il comporte :
. une zone d'un lit de rivière ou de berge ;
. un mat en fibre végétale, tel du coir ou un autre matériau décomposable en substances organiques, pouvant être étendu sur le lit de la rivière ou la berge ;
. des moyens mécaniques de support sous la forme de pieux de bois ou d'un autre matériau biodégradable enfoncés dans le mat et le sol pour fixer le mat sur le sol ;
. une pluralité de sacs ou d'éléments tubulaires en matériau biodégradable mis en place et fixés au mat, dans lesquels se trouvent des espèces végétales autochtones phytopurifiantes préalablement sélectionnées et préparées en laboratoire et/ou sur des aires de forçage ;
. ces supports mécaniques étant à la fois en bois vivant et mort et particulièrement en espèces végétales vivantes autochtones préparées en laboratoire et/ou sur des aires de forçage.

11. Procédé selon la revendication 10, caractérisé en ce que le mat présente deux bandes latérales de renforcement dans desquelles on enfile un fil métallique ou un lien amovible pour faciliter la mise en place sur le lit de la rivière.

12. Procédé selon les revendications à partir de la dixième, caractérisé en ce que le mat est formé de fils métalliques dont le diamètre n'est pas inférieur à 2 mm.

13. Procédé selon les revendications à partir de la dixième, caractérisé en ce que la force élastique du mat n'est pas inférieure à 8 kN/m.

14. Procédé selon les revendications à partir de la dixième, caractérisé en ce que les éléments tubulaires ont un diamètre supérieur à 20 cm.

## Patentansprüche

1. Verfahren zur Phytoreinigung und Renaturierung von fließenden Gewässern sowie für den Schutz und die Sicherung der Ufer bzw. Küsten von Wasserflächen, dadurch gekennzeichnet, dass eine Matte aus Kokosfaser oder anderem in organische Substanzen zersetzbaren Material im Flussbett und auf den Uferstreifen des jeweiligen Wasserlaufs eingebaut wird, und dass an der Matte Säcke beliebiger Form oder rohrförmige Elemente befestigt werden, die auch aus einem in organische Substanzen zersetzbaren Material bestehen und in denen zuvor im Labor und/oder auf Schnellanzuchtflächen gezüchtete Pflanzenarten zur Phytoreinigung in entsprechender Menge eingepflanzt werden, wobei die Matten mittels mechanischer Stützen aus Holz und/oder einem anderen in organische Substanzen auflösbaren Material am Grund verankert werden, welche zum Zweck der Dammaufschüttung und der Konsolidierung in das Flussbett und im Uferbereich eingebaut und versenkt werden.

2. Verfahren nach Anspruch 1, gekennzeichnet durch die folgenden Schritte:
a) vor Ort Sammeln, Selektieren, Vorbereiten, Vermehren und Anzüchten autochthoner Flusspflanzenarten im Labor und/oder in Schnellanzuchtbereichen;
b) Anordnen rohrförmiger Elemente bzw. Säcke beliebiger Form und in vorgegebener Größe, die aus einer Matte aus Kokosfasern oder Sisal oder einem anderen in organische Substanzen zersetzbaren Material gebildet und entsprechend der Fließrichtung des Fließgewässers ausgerichtet werden;
c) Verpflanzen der in Schritt a) vorbereiteten autochthonen Flusspflanzenarten in die Säcke bzw. rohrförmigen Elemente;
d) Ausbreiten einer Matte mit vorgegebener Größe, die aus Kokosfaser oder Sisal oder anderem in organische Substanzen zersetzbaren Material (Bio-Matte) gebildet ist, von der Uferböschung aus zum Flussbett und auf der Dammaufschüttung selbst;
e) Verankern der Bio-Matte am Grunds mit Holzpfählen;
f) Einbauen und Sichern der rohrförmigen Elemente bzw. Säcke an der Bio-Matte an Positionen (ausgerichtet in Richtung zum Strom) entsprechend der Strömungsrichtung des Wassers;
g) Einbauen einer Matratze mit dem pflanzlichen Material der in Schritt a) vorbereiteten autochthonen Flusspflanzenarten nahe der Dammpfähle;
h) Ausbringen eines organischen Substrates am Ende der Bio-Matte zum Füllen des Zwischenraums zwischen der Matratze und der Uferböschung und dann Aussäen der in Schritt a) vorbereiteten Flusspflanzenarten im Nassen;
i) Auspflanzen autochthoner Stecklinge, um die perfekte Konsolidierung der Uferböschung zu gewährleisten und somit jede Bodenerosion und/oder Unterspülung im Falle eines Flusshochwassers zu vermeiden.

3. Verfahren nach den Ansprüchen 1 und 2, dadurch gekennzeichnet, dass die Pfähle zur Verankerung der Matten aus abgestorbenem Holz bestehen.

4. Verfahren nach den Ansprüchen 1 und 2, dadurch gekennzeichnet, dass die Pfähle zur Verankerung der Matten Pfähle aus autochthonem lebendem Pflanzenmaterial sind.

5. Verfahren nach den Ansprüchen 1 und 2, dadurch gekennzeichnet, dass die Bio-Matte eine Matte darstellt, die aus geflochtenem pflanzlichen Material wie Kokosfaser, Sisal oder anderem ähnlichen Material besteht, das eine hohe Längendehnungsfestigkeit aufweist.

6. Verfahren nach den Ansprüchen 1 und 2, dadurch gekennzeichnet, dass die Säcke bzw. rohrförmigen Elemente, in denen die autochthonen Flusspflanzenarten ausgepflanzt werden, unter Ausrichtung entsprechend der Strömungsrichtung des Flusses an der Bio-Matte befestigt werden, wobei die Befestigungsmittel aus demselben Material wie die Biomatte bestehen und in organische Substanzen zersetzbar sind.

7. Verfahren nach den vorhergehenden Ansprüchen, dadurch gekennzeichnet, dass ein weiterer Schritt zur Positionierung und Eintreiben der im Labor oder in Schnellanzuchtbereichen vorbereiteten Pfähle aus autochthonem, lebendem Pflanzenmaterial in die Schrägung, die von Erosion und Auswaschung des Mutterbodens besonders betroffen sind, sowie zwischen Felsspalten vorgesehen ist.

8. Verfahren nach Anspruch 2, dadurch gekennzeichnet, dass die rohrförmigen Elemente integraler Bestandteil der Bio-Matte sind bzw. an dieser vor dem Schritt d) fest angebracht werden.

9. Verfahren nach den Ansprüchen 1 und 2, dadurch gekennzeichnet, dass jedes rohrförmige Element an zwei querliegenden, parallelen und voneinander beabstandeten Bio-Matten befestigt wird.

10. System zur Phytoreinigung und Renaturierung von Fließgewässern sowie für den Schutz und die Sicherung der Ufer bzw. Küsten von Wasserflächen, dadurch gekennzeichnet, dass es folgendes umfasst:
- einen Abschnitt eines Flussbettes oder einer Küste bzw. eines Ufers;
- eine Matte aus Pflanzenfasern wie beispielsweise Kokosfasern oder einem anderen in organische Substanzen zersetzbaren Material, das sich auf dem Flussbett oder am Ufer bzw. der Küste ausbreiten lässt;
- mechanische Stützeinrichtungen in Form von Pfählen aus Holz oder einem anderen biologisch abbaubaren Material, die zur Befestigung der Matte am Grund in die Matte und den Grund eingetrieben sind;
- eine Vielzahl von Säcken bzw. rohrförmigen Elementen aus einem biologisch abbaubaren Material, die in die Matte eingebaut und an dieser befestigt sind, in denen sich zuvor ausgewählte und im Labor und/oder in Schnellanzuchtbereichen vorbereitete autochthone Pflanzenarten zur Phytoreinigung befinden;
- wobei die mechanischen Abstützeinrichtungen aus abgestorbenem und lebendem Holz bestehen und insbesondere aus autochthonen, lebenden Pflanzenarten, die im Labor und/oder auf Schnellanzuchtflächen vorbereitet wurden.

11. System nach Anspruch 10, dadurch gekennzeichnet, dass die Matte zwei seitliche Aussteifungsstreifen aufweist, entlang denen ein entfernbarer Draht bzw. Zuganker geführt wird, um so den Einbau im Flussbett zu vereinfachen.

12. System nach den Ansprüchen 10 bis 11, dadurch gekennzeichnet, dass die Matte aus Drähten gebildet ist, deren Durchmesser mindestens 2 mm beträgt.

13. System nach den Ansprüchen 10 bis 12, dadurch gekennzeichnet, dass die Matte eine Zugfestigkeit von mindestens 8 kN/m aufweist.

14. System nach den Ansprüchen 10 bis 13, dadurch gekennzeichnet, dass die rohrförmigen Teile einen Durchmesser von mehr als 20 cm aufweisen.
